# EUROPEAN PATENT APPLICATION

(11) **EP 4 319 410 A1**
(43) Date of publication of application: **07.02.2024**
(21) Application number: 22794466.7
(22) Date of filing: 29.03.2022
(51) Int. Cl.: H04W 72/04

(54) **METHOD FOR DETECTING PSCCH, AND COMMUNICATION APPARATUS**

(30) Priority: 30.04.2021 CN 202110486059; 17.06.2021 CN 202110673919
(71) Applicant: Huawei Technologies Co., Ltd., Longgang Shenzhen, Guangdong 518129 (CN)
(72) Inventor: WANG, Bichai, Shenzhen, Guangdong 518129 (CN); LI, Xueru, Shenzhen, Guangdong 518129 (CN); XU, Haibo, Shenzhen, Guangdong 518129 (CN)
(74) Representative: Epping - Hermann - Fischer
(86) International application number: PCT/CN2022/083728
(87) International publication number: WO 2022/227993

(57) **Abstract**

This application provides a PSCCH detection method and a communication apparatus. In the method, a first terminal device may detect a first PSCCH based on a resource included in a candidate resource set indicated by first indication information. This avoids overheads caused when the first terminal device needs to blindly detect the PSCCH, and helps reduce energy consumption. In particular, when a bandwidth is relatively large or there are a relatively large quantity of sub-channels, this can avoid overheads caused when the first terminal device needs to blindly detect the PSCCH.

## Description

This application claims priority to Chinese Patent Application No. 202110486059.6, filed with the China National Intellectual Property Administration on April 30, 2021 and entitled "COMMUNICATION METHOD, TERMINAL, AND NETWORK DEVICE", and to Chinese Patent Application No. 202110673919.7, filed with the China National Intellectual Property Administration on June 17, 2021 and entitled "PSCCH DETECTION METHOD AND COMMUNICATION APPARATUS", both of which are incorporated herein by reference in their entireties.

### TECHNICAL FIELD

This application relates to the communication field, and more specifically, to a PSCCH detection method and a communication apparatus in the communication field.

### BACKGROUND

Terminal devices may directly communicate with each other by using a sidelink (sidelink, SL). Compared with cellular communication, SL communication can reduce a transmission delay, and can also alleviate a load of a cellular network. There are two resource allocation manners for SL communication. In one manner, a network device allocates a resource used for SL communication, and in the other manner, the terminal device selects a resource from a preconfigured resource pool. If the terminal device is within a coverage area of the network device, the terminal device may perform SL communication by using the resource allocated by the network device, or by selecting the resource from the preconfigured resource pool. If the terminal device is outside a coverage area of the network device, the terminal device needs to select the resource from the preconfigured resource pool. For example, the terminal device may send a physical sidelink control channel (physical sidelink control channel, PSCCH) on the resource selected from the preconfigured resource pool, and a terminal device that receives the PSCCH needs to perform blind detection on the PSCCH in the preconfigured resource pool. When a bandwidth of the resource in the preconfigured resource pool is relatively large or there are a relatively large quantity of corresponding sub-channels, overheads of the blind detection performed by the terminal device that receives the PSCCH are relatively large. Consequently, power consumption is also relatively high.

### SUMMARY

Embodiments of this application provide a PSCCH detection method and a communication apparatus, to reduce overheads of blind detection and reduce power consumption of a terminal device.

According to a first aspect, a PSCCH detection method is provided. The method is applicable to a first terminal device, and the method includes: receiving first indication information, where the first indication information indicates a candidate resource set, and a resource included in the candidate resource set is a candidate resource used by a second terminal device to send a PSCCH; and detecting a first PSCCH based on the resource included in the candidate resource set indicated by the first indication information.

In the foregoing solution, the first terminal device may detect the first PSCCH based on the resource included in the candidate resource set indicated by the first indication information. This reduces overheads caused when the first terminal device needs to blindly detect the PSCCH, and helps reduce energy consumption. In particular, when a bandwidth is relatively large or there are a relatively large quantity of sub-channels, this can reduce overheads caused when the first terminal device needs to blindly detect the PSCCH.

Optionally, the candidate resource set includes one or more resources.

Optionally, the one or more resources included in the candidate resource set may be one or more frequency domain resources, or one or more time domain resources, or one or more time-frequency domain resources.

Optionally, the candidate resource set may be configured by a network device or preconfigured. Optionally, the candidate resource set may be determined by the second terminal device.

Optionally, the detecting a first PSCCH based on the resource included in the candidate resource set indicated by the first indication information includes: if reference signal received power RSRP corresponding to the received first indication information is greater than a first RSRP threshold, detecting the first PSCCH based on the resource included in the candidate resource set indicated by the first indication information.

In the foregoing solution, if the RSRP of receiving the first indication information by the first terminal device is greater than the first RSRP threshold, the first terminal device detects the first PSCCH based on the resource included in the candidate resource set. In this case, the first terminal device does not detect the first PSCCH once receiving the first indication information. In other words, after receiving the first indication information, the first terminal device determines, based on the RSRP of receiving the first indication information, whether to detect the PSCCH. When the RSRP of receiving the first indication information is greater than the first RSRP threshold, it indicates that signal strength of receiving the first indication information is relatively large, or the first terminal device is relatively close to the second terminal device. If the first terminal device is a target receiving device of the second terminal device, the first terminal device detects the first PSCCH sent by the second terminal device, so that a detection success rate can be improved. If the first terminal device is another device that needs to select a resource to send data, interference between the first terminal device and the second terminal device may be relatively large. The first terminal device detects the first PSCCH sent by the second terminal device, so that a resource selected by the second terminal device can be avoided.

Optionally, the RSRP of receiving the first indication information may be RSRP of receiving one message. The RSRP of the message may be the RSRP of receiving the first indication information. Alternatively, RSRP of a message associated with the message may be the RSRP of receiving the first indication information.

In some possible implementations, the first RSRP threshold is configured by the network device or preset.

In some possible implementations, the first indication information further indicates a first service priority. The method further includes: determining the first RSRP threshold based on a second service priority of the first terminal device and the first service priority, or determining the first RSRP threshold based on the first service priority.

In the foregoing solution, different service priorities correspond to different RSRP thresholds. The first terminal device may determine the first RSRP threshold based on the first service priority indicated by the first indication information. Alternatively, the first terminal device may determine the first RSRP threshold based on the second service priority of the first terminal device and the first service priority. In this case, a case in which the first terminal device cannot determine the first RSRP threshold does not occur.

Optionally, if the second terminal device supports only one service, the first service priority is a priority of the service. Optionally, if the second terminal device supports a plurality of services, the first service priority may be a priority corresponding to a service with a highest priority in the plurality of services. Optionally, if the second terminal device supports a plurality of services, the first service priority may be a priority corresponding to any one of the plurality of services.

Optionally, the first terminal device may preset a correspondence between the service priority and the RSRP threshold. The first terminal device may determine the first RSRP threshold based on the first service priority indicated by the first indication information and the correspondence. Alternatively, the first terminal device may determine the first RSRP threshold based on the first service priority, the second service priority, and the correspondence.

In some possible implementations, the first indication information further indicates a destination address. The destination address indicated by the first indication information is an address corresponding to a service. The detecting a first PSCCH based on the resource included in the candidate resource set indicated by the first indication information includes:
if a destination address of one service of the first terminal device is the same as the destination address indicated by the first indication information, detecting the first PSCCH based on the resource included in the candidate resource set indicated by the first indication information. The method further includes:
receiving, based on the first PSCCH, a first physical sidelink shared channel PSSCH associated with the first PSCCH.

In the foregoing solution, if one destination address of the first terminal device is the same as the destination address indicated by the first indication information, it indicates that the second terminal device that sends the first indication information needs to transmit the PSSCH with the first terminal device. Therefore, the first terminal device needs to detect the first PSCCH based on the candidate resource set, and receive, from the second terminal device, a first PS SCH associated with the first PSCCH, so that the first PSSCH may be transmitted between the first terminal device and the second terminal device.

Optionally, the destination address indicated by the first indication information may be a destination ID that is of a first service at a layer 2 and that is determined by the second terminal device, and the destination address of one service of the first terminal device may be a destination ID of the first service at a layer 2 of the first terminal device. The first PSSCH associated with the first PSCCH may be a PSSCH corresponding to the first service.

In some possible implementations, radio resource control RRC signaling is received by using a second PSSCH. The RRC signaling carries the first indication information.

In the foregoing solution, the second terminal device may send, by using the second PSSCH, the RRC signaling that carries the first indication information, and the first terminal device may receive, by using the second PSSCH, the RRC signaling that carries the first indication information. In some possible implementations, a media access control control element MAC CE is received by using a second PSSCH. The MAC CE carries the first indication information.

In the foregoing solution, the second terminal device may send, by using the second PSSCH, the MAC CE that carries the first indication information, and the first terminal device may receive, by using the second PSSCH, the MAC CE that carries the first indication information.

In some possible implementations, second stage sidelink control information SCI 2 is received by using a second PSSCH. The SCI 2 carries the first indication information.

In the foregoing solution, the second terminal device may send, by using the second PSSCH, the SCI 2 that carries the first indication information, and the first terminal device may receive, by using the second PSSCH, the SCI 2 that carries the first indication information.

In some possible implementations, sidelink control information SCI associated with the second PSSCH is received. The SCI includes second indication information, and the second indication information indicates that the second PSSCH carries the first indication information.

In the foregoing solution, the first terminal device may determine, based on the second indication information carried in the SCI associated with the second PSSCH, that the second PSSCH carries the first indication information. This facilitates the first terminal device to determine the first indication information in the second PSSCH based on the second indication information. Optionally, the SCI associated with the second PSSCH may be first stage sidelink control information SCI 1 or sidelink control information SCI. Optionally, SCI designs of different communication systems are different. In some communication systems, the SCI is sent by using the PSCCH. In some communication systems, some SCI is sent by using the PSCCH, and remaining SCI is sent by using the PSSCH. For example, SCI 1 is sent by using the PSCCH, and SCI 2 is sent by using the PSSCH.

In some possible implementations, the method further includes: sending a first response message to the second terminal device. The first response message indicates that the first terminal device receives the first indication information.

In the foregoing solution, if the second terminal device receives the first response message, it indicates that the first terminal device receives the first indication information. Therefore, the second terminal device may send at least one first PSCCH based on the resource included in the candidate resource set indicated by the first indication information.

In some possible implementations, the first response message is a first hybrid automatic repeat request HARQ message of the second PSSCH.

In some possible implementations, the receiving first indication information includes: receiving an RRC connection establishment request message. The RRC connection establishment request message includes the first indication information. In some possible implementations, the first response message may be an RRC connection establishment response message. In this way, when the second terminal device receives the RRC connection establishment response message, it indicates that the first terminal device receives the first indication information. Therefore, the second terminal device may send at least one first PSCCH based on the resource included in the candidate resource set indicated by the first indication information.

In the foregoing solution, if the second terminal device sends the first indication information by using the second PSSCH, when receiving the second PSSCH, the first terminal device may send the first HARQ of the second PSSCH to the second terminal device. In this way, the second terminal device may determine, based on the first HARQ, that the first terminal device receives the first indication information. Therefore, the second terminal device may send the at least one first PSCCH based on the resource included in the candidate resource set indicated by the first indication information.

In some possible implementations, the receiving first indication information includes: receiving a physical sidelink broadcast channel PSBCH. The PSBCH includes the first indication information. Optionally, the second terminal device may send the PSBCH. The PSBCH carries the first indication information. Alternatively, the second terminal device may send a sidelink synchronization signal block S-SSB, and a PSBCH in the S-SSB carries the first indication information.

In some possible implementations, the receiving first indication information includes: receiving the first indication information on a candidate resource configured by the network device or a preconfigured candidate resource.

In the foregoing solution, the second terminal device may send the first indication information on the preconfigured candidate resource, and the first terminal device may receive the first indication information on the preconfigured candidate resource. Alternatively, the second terminal device may send the first indication information on the candidate resource configured by the network device, and the first terminal device may receive the first indication information on the candidate resource configured by the network device. In this way, it is ensured that the first terminal device receives the first indication information.

Optionally, a bandwidth of the preconfigured candidate resource is less than a first preset bandwidth value, or a quantity of sub-channels of the preconfigured candidate resource is less than a first preset channel value. In this way, when the second terminal device sends the first indication information on the preconfigured candidate resource, the first terminal device can reduce overheads of blind detection in a process of detecting the first indication information on the preconfigured candidate resource. Optionally, a bandwidth of the candidate resource configured by the network device is less than a first bandwidth preset value, or a quantity of sub-channels of the preconfigured resource is less than a first channel preset value. In this way, when the second terminal device sends the first indication information on the candidate resource configured by the network device, the first terminal device can reduce overheads of blind detection in a process of detecting the first indication information on the candidate resource configured by the network device.

In some possible implementations, the detecting a first PSCCH based on the resource included in the candidate resource set indicated by the first indication information includes: determining that there is an intersecting resource between the resource included in the candidate resource set indicated by the first indication information and a resource in a first sensing window; and detecting the first PSCCH on the intersecting resource.

In the foregoing solution, if the first terminal device needs to transmit data, the first terminal device may determine the first sensing window. The first terminal device may determine the intersecting resource between the resource included in the candidate resource set indicated by the first indication information and the resource in the first sensing window, and detect the first PSCCH on the intersecting resource.

According to a second aspect, a PSCCH detection method is provided. The method is applicable to a second terminal device, and the method includes: sending first indication information, where the first indication information indicates a candidate resource set, and a resource included in the candidate resource set is a candidate resource used by the second terminal device to send a PSCCH; and sending at least one first PSCCH based on the resource included in the candidate resource set indicated by the first indication information.

In the foregoing solution, the second terminal device may send the at least one first PSCCH based on the resource included in the candidate resource set indicated by the first indication information. The first terminal device may detect the first PSCCH based on the resource included in the candidate resource set indicated by the first indication information. This reduces overheads caused when the first terminal device needs to blindly detect the PSCCH, and helps reduce energy consumption.

Optionally, the second terminal device sends the at least one first PSCCH based on the resource included in the candidate resource set, and if the RSRP of receiving the first indication information by the first terminal device is greater than the first RSRP threshold, the first terminal device detects the first PSCCH based on the resource included in the candidate resource set. In particular, when a bandwidth is relatively large or there are a relatively large quantity of sub-channels, this can reduce overheads caused when the first terminal device needs to blindly detect the PSCCH.

In some possible implementations, the first indication information further indicates a first service priority.

Optionally, if the second terminal device supports only one service, the first service priority is a priority of the service. Optionally, if the second terminal device supports a plurality of services, the first service priority may be a priority corresponding to a service with a highest priority in the plurality of services. Optionally, if the second terminal device supports a plurality of services, the first service priority may be a priority corresponding to any one of the plurality of services. Optionally, the first service priority indicated by the first indication information is used by the first terminal device to determine the first RSRP threshold.

In some possible implementations, the first indication information further indicates a destination address. The destination address indicated by the first indication information is an address corresponding to a service. The method further includes: sending, based on the at least one first PSCCH, at least one physical sidelink shared channel PSSCH associated with the at least one first PSCCH.

Optionally, the destination address indicated by the first indication information may be a destination ID that is of a first service at a layer 2 and that is determined by the second terminal device, and the destination address of one service of the first terminal device may be the destination ID of the first service at the layer 2 of the first terminal device. The first PSSCH associated with the first PSCCH may be a PSSCH corresponding to the first service.

In some possible implementations, radio resource control RRC signaling is sent by using a second PSSCH. The RRC signaling carries the first indication information.

In some possible implementations, a media access control control element MAC CE is sent by using a second PSSCH. The MAC CE carries the first indication information.

In some possible implementations, second stage sidelink control information SCI 2 is sent by using a second PSSCH. The SCI 2 carries the first indication information.

In some possible implementations, the method further includes: sending sidelink control information SCI associated with the second PSSCH. The SCI includes second indication information. The second indication information indicates that the second PSSCH carries the first indication information.

In some possible implementations, the method further includes: receiving a first response message. The first response message indicates that the first terminal device receives the first indication information.

In some possible implementations, the first response message is a first hybrid automatic repeat request HARQ message of the second PSSCH.

In some possible implementations, the sending first indication information includes: sending an RRC connection establishment request message. The RRC connection establishment request message includes the first indication information. In some possible implementations, the first response message may be an RRC connection establishment response message. In this way, when the second terminal device receives the RRC connection establishment response message, it indicates that the first terminal device receives the first indication information. Therefore, the second terminal device may send at least one first PSCCH based on the resource included in the candidate resource set indicated by the first indication information.

In some possible implementations, the sending first indication information includes: sending a physical sidelink broadcast channel PSBCH. The PSBCH includes the first indication information. In some possible implementations, the sending first indication information includes: sending the first indication information based on a candidate resource configured by a network device or a preconfigured candidate resource.

In some possible implementations, the sending the first indication information based on a candidate resource configured by a network device or a preconfigured candidate resource includes:
receiving at least one second PSCCH in a second sensing window; determining a reserved resource in a second selection window based on the at least one second PSCCH; and
sending the first indication information based on the reserved resource in the second selection window and the preconfigured candidate resource; or
sending the first indication information based on the reserved resource in the second selection window and the candidate resource configured by the network device.

In the foregoing solution, when needing to send the first indication information, the second terminal device may determine the second sensing window and the second selection window. The second terminal device may receive the at least one second PSCCH in the second sensing window. Control information carried in the at least one second PSCCH indicates a reserved resource in the second selection window. The second terminal device sends the first indication information based on the reserved resource in the second selection window, and the candidate resource configured by the network device, or the preconfigured candidate resource. Optionally, when selecting a resource from the candidate resource configured by the network device or the preconfigured candidate resource, the second terminal device may avoid the reserved resource in the second selection window of the at least one second PSCCH. In other words, if there is an intersecting resource between the reserved resource in the second selection window of the at least one second PSCCH and the candidate resource configured by the network device or the preconfigured candidate resource, when selecting, on the candidate resource configured by the network device or the preconfigured candidate resource, a resource for sending the first indication information, the second terminal device needs to avoid the intersecting resource. This helps reduce interference and improve a possibility of successfully sending the first indication information.

In some possible implementations, the sending at least one first PSCCH based on the resource included in the candidate resource set indicated by the first indication information includes:
determining that there is an intersecting resource between the resource included in the candidate resource set indicated by the first indication information and a resource in a first selection window; and
sending the at least one first PSCCH on the intersecting resource.

In the foregoing solution, if the first terminal device needs to transmit data, the first terminal device may determine the first sensing window. The first terminal device may determine the intersecting resource between the resource included in the candidate resource set indicated by the first indication information and the resource in the first sensing window, and detect the first PSCCH on the intersecting resource.

According to a third aspect, a PSCCH detection apparatus is provided. The apparatus is configured to perform the method in the possible implementations of the first aspect. Specifically, the apparatus may include a processing unit and a transceiver unit. The transceiver unit may communicate with an outside, and the processing unit is configured to process data. The transceiver unit may also be referred to as a communication interface or a communication unit. The apparatus may be configured to perform an action performed by the first terminal device in the possible implementations of the first aspect. In this case, the apparatus may be referred to as a first terminal device. The transceiver unit is configured to perform receiving and sending related operations of the first terminal device in the possible implementations of the first aspect. The processing unit is configured to perform a processing related operation of the first terminal device in the possible implementations of the first aspect.

The transceiver unit is configured to receive first indication information. The first indication information indicates a candidate resource set, and a resource included in the candidate resource set is a candidate resource used by a second terminal device to send a PSCCH. If reference signal received power RSRP corresponding to the received first indication information is greater than a first RSRP threshold, the processing unit is configured to detect a first PSCCH based on the resource included in the candidate resource set indicated by the first indication information.

In some possible implementations, the first RSRP threshold is configured by the network device or preset.

In some possible implementations, the first indication information further indicates a first service priority. The processing unit is configured to: determine the first RSRP threshold based on a second service priority of the first terminal device and the first service priority, or determine the first RSRP threshold based on the first service priority.

In some possible implementations, the first indication information further indicates a destination address. The destination address indicated by the first indication information is an address corresponding to a service. The processing unit is specifically configured to: control the transceiver unit, and if a destination address of one service of the first terminal device is the same as the destination address indicated by the first indication information, detect the first PSCCH based on the resource included in the candidate resource set indicated by the first indication information. The transceiver unit is further configured to receive, based on the first PSCCH, a first physical sidelink shared channel PSSCH associated with the first PSCCH.

In some possible implementations, the transceiver unit is further configured to: receive radio resource control RRC signaling by using a second PSSCH, where the RRC signaling carries the first indication information; or
receive a media access control control element MAC CE by using a second PSSCH, where the MAC CE carries the first indication information; or
receive second stage sidelink control information SCI 2 by using a second PSSCH, where SCI 2 carries the first indication information.

In some possible implementations, the transceiver unit is further configured to receive sidelink control information SCI associated with the second PSSCH. The SCI includes second indication information. The second indication information indicates that the second PSSCH carries the first indication information.

In some possible implementations, the transceiver unit is specifically configured to receive a physical sidelink broadcast channel PSBCH. The PSBCH includes the first indication information. In some possible implementations, the transceiver unit is specifically configured to receive the first indication information on a candidate resource configured by the network device or a preconfigured candidate resource.

In some possible implementations, the processing unit is configured to:
determine that there is an intersecting resource between the resource included in the candidate resource set indicated by the first indication information and a resource in a first sensing window.

The transceiver unit is configured to detect the first PSCCH on the intersecting resource.

According to a fourth aspect, a PSCCH detection apparatus is provided. The apparatus is configured to perform the method in the possible implementations of the second aspect. Specifically, the apparatus may include a processing unit and a transceiver unit. The transceiver unit may communicate with an outside, and the processing unit is configured to process data. The transceiver unit may also be referred to as a communication interface or a communication unit. The apparatus may be configured to perform an action performed by the terminal device in the possible implementations of the second aspect. In this case, the apparatus may be referred to as a terminal device. The transceiver unit is configured to perform receiving and sending related operations of the terminal device in the possible implementations of the second aspect. The processing unit is configured to perform a processing related operation of the terminal device in the possible implementations of the second aspect.

The transceiver unit is configured to send first indication information. The first indication information indicates a candidate resource set, and a resource included in the candidate resource set is a candidate resource used by a second terminal device to send a PSCCH. The transceiver unit is further configured to send at least one first PSCCH based on the resource included in the candidate resource set indicated by the first indication information.

In some possible implementations, the first indication information further indicates a first service priority.

In some possible implementations, the first indication information further indicates a destination address. The destination address indicated by the first indication information is an address corresponding to a service. The transceiver unit is further configured to:
send, based on the at least one first PSCCH, at least one physical sidelink shared channel PSSCH associated with the at least one first PSCCH.

In a possible implementation, the processing unit is further configured to:
send radio resource control RRC signaling by using a second PSSCH, where the RRC signaling carries the first indication information; or
send a media access control control element MAC CE by using a second PSSCH, where the MAC CE carries the first indication information; or
send second stage sidelink control information SCI 2 by using a second PSSCH, where the SCI 2 carries the first indication information.

In some possible implementations, the transceiver unit is further configured to send sidelink control information SCI associated with the second PSSCH. The SCI includes second indication information. The second indication information indicates that the second PSSCH carries the first indication information.

In some possible implementations, the transceiver unit is specifically configured to send a physical sidelink broadcast channel PSBCH. The PSBCH includes the first indication information.

In some possible implementations, the transceiver unit is specifically configured to send the first indication information based on a candidate resource configured by a network device or a preconfigured candidate resource.

In a possible implementation, the processing unit is configured to:
receive at least one second PSCCH in a second sensing window.

The processing unit is configured to determine a reserved resource in a second selection window based on the at least one second PSCCH.

The transceiver unit is configured to:
send the first indication information based on the reserved resource in the second selection window and the preconfigured candidate resource; or
send the first indication information based on the reserved resource in the second selection window and the candidate resource configured by the network device.

In some possible implementations, the processing unit is configured to determine that there is an intersecting resource between the resource included in the candidate resource set indicated by the first indication information and a resource in a first selection window.

The transceiver unit is configured to send the at least one first PSCCH on the intersecting resource. According to a fifth aspect, a communication apparatus is provided. The communication apparatus includes a processor and a memory. The processor is coupled to the memory, the memory is configured to store a computer program or instructions, and the processor is configured to execute the computer program or the instructions stored in the memory, so that the method in any one of the first aspect or the possible implementations of the first aspect is performed.

For example, the processor is configured to execute the computer program or the instructions stored in the memory, so that the communication apparatus performs the method in any one of the first aspect or the possible implementations of the first aspect.

Optionally, the apparatus includes one or more processors.

Optionally, the apparatus may further include a memory coupled to the processor.

Optionally, the apparatus may include one or more memories.

Optionally, the memory may be integrated with the processor, or the memory and the processor are disposed separately.

Optionally, the apparatus may further include a transceiver.

According to a sixth aspect, a communication apparatus is provided. The communication apparatus includes a processor and a memory. The processor is coupled to the memory, the memory is configured to store a computer program or instructions, and the processor is configured to execute the computer program or the instructions stored in the memory, so that the method in any one of the second aspect or the possible implementations of the second aspect is performed.

For example, the processor is configured to execute the computer program or the instructions stored in the memory, so that the communication apparatus performs the method in any one of the second aspect or the possible implementations of the second aspect.

Optionally, the apparatus includes one or more processors.

Optionally, the apparatus may further include a memory coupled to the processor.

Optionally, the apparatus may include one or more memories.

Optionally, the memory may be integrated with the processor, or the memory and the processor are disposed separately.

Optionally, the apparatus may further include a transceiver.

According to a seventh aspect, a communication system is provided. The communication system includes the communication apparatus in any one of the third aspect or the possible implementations of the third aspect, and the communication apparatus in any one of the fourth aspect or the possible implementations of the fourth aspect. Alternatively, the communication system includes the communication apparatus in any one of the fifth aspect or the possible implementations of the fifth aspect, and the communication apparatus in any one of the sixth aspect or the possible implementations of the sixth aspect.

According to an eighth aspect, a computer-readable storage medium is provided. The computer-readable storage medium stores a computer program (which may also be referred to as instructions or code) used to perform the method in any one of the first aspect or the possible implementations of the first aspect.

For example, when the computer program is executed by a computer, the computer is enabled to perform the method according to any one of the first aspect or the possible implementations of the first aspect. The computer may be a communication apparatus.

According to a ninth aspect, a computer-readable storage medium is provided. The computer-readable storage medium stores a computer program (which may also be referred to as instructions or code) used to perform the method in any one of the second aspect or the possible implementations of the second aspect.

For example, when the computer program is executed by a computer, the computer is enabled to perform the method in any one of the second aspect or the possible implementations of the second aspect. The computer may be a communication apparatus.

According to a tenth aspect, this application provides a chip, including a processor. The processor is configured to read and execute a computer program stored in a memory, to perform the method according to any one of the first aspect or the possible implementations of the first aspect. Optionally, the chip further includes the memory, and the memory is connected to the processor through a circuit or a line.

Further, optionally, the chip further includes a communication interface.

According to an eleventh aspect, this application provides a chip, including a processor. The processor is configured to read and execute a computer program stored in a memory, to perform the method according to any one of the second aspect or the possible implementations of the second aspect.

Optionally, the chip further includes the memory, and the memory is connected to the processor through a circuit or a line.

Further, optionally, the chip further includes a communication interface.

According to a twelfth aspect, this application provides a computer program product. The computer program product includes a computer program (which may also be referred to as instructions or code). When the computer program is executed by a computer, the computer is enabled to perform the method in any one of the first aspect or the possible implementations of the first aspect.

According to a thirteenth aspect, this application provides a computer program product, where the computer program product includes a computer program (which may also be referred to as instructions or code). When the computer program is executed by a computer, the computer is enabled to perform the method in any one of the second aspect or the possible implementations of the second aspect.

According to a fourteenth aspect, this application provides a communication apparatus, including units configured to perform the method in any embodiment of this application.

### BRIEF DESCRIPTION OF DRAWINGS

FIG. 1 is a schematic diagram of a communication system according to an embodiment of this application;
FIG. 2 is a schematic diagram of a PSCCH detection method according to an embodiment of this application;
FIG. 3 is a schematic diagram of a second sensing window and a second selection window according to an embodiment of this application;
FIG. 4 is a schematic diagram of reserved resources in both a second sensing window and a second selection window according to an embodiment of this application;
FIG. 5 is a schematic diagram of an S-SSB according to an embodiment of this application;
FIG. 6 is another schematic diagram of a PSCCH detection method according to an embodiment of this application;
FIG. 7 is a still another schematic diagram of a PSCCH detection method according to an embodiment of this application; and
FIG. 8 is a schematic diagram of a communication apparatus for detecting a PSCCH according to an embodiment of this application.

### DESCRIPTION OF EMBODIMENTS

The following describes technical solutions in embodiments of this application with reference to accompanying drawings in embodiments of this application.

It should be understood that division of manners, cases, types, and embodiments in embodiments of this application are only for ease of description, but should not constitute any special limitation, and features in various manners, types, cases, and embodiments may be combined when there is no contradiction.

It should be further understood that the terms "first", "second", and "third" in embodiments of this application are only used for distinguishing, and should not be construed as any limitation on this application. Further, it should be understood that sequence numbers of the processes do not mean execution sequences in various embodiments of this application. The execution sequences of the processes should be determined based on functions and internal logic of the processes, and should not be construed as any limitation on the implementation processes of embodiments of this application.

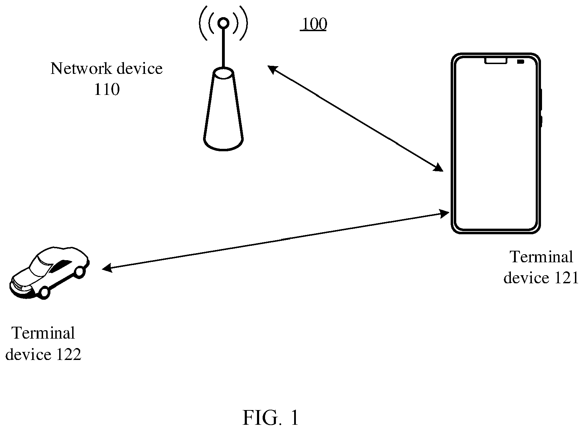

FIG. 1 is a schematic diagram of an inter-device communication system 100. The wireless communication device may include one or more network devices, for example, a network device 110 in FIG. 1. Both a terminal device 121 and a terminal device 122 may communicate with the network device 110. For example, in FIG. 1, the network device 110 communicates with the terminal device 121. A link used by the terminal device 121 to send data to the network device 110 is referred to as an uplink (uplink), and a link used by the terminal device 121 to receive data sent by the network device 110 is referred to as a downlink (downlink). As shown in FIG. 1, the wireless communication system 100 may further include a plurality of terminal devices, for example, the terminal device 121 and the terminal device 122 in FIG. 1. The terminal device 121 may directly communicate with the terminal device 122. A link for transmitting data between the terminal device 121 and the terminal device 122 is referred to as a sidelink (sidelink). For example, the terminal device 121 may send data to the terminal device 122 by using the sidelink, and the terminal device 122 may send data to the terminal device 121 by using the sidelink. The sidelink is generally used in a scenario in which direct communication can be performed between devices, for example, vehicle to everything (vehicle to everything, V2X) or device to device (device to device, D2D). V2X communication may be considered as a special case of D2D communication. A new radio (new radio, NR) access technology is a current mainstream wireless communication technology. For a V2X service feature and a new service requirement, the new radio access technology can support V2X communication with a lower latency and higher reliability. V2X is a basis and key technology for implementing an intelligent vehicle, autonomous driving, and an intelligent transportation system. V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like. V2N communication is a currently most widely used form of an internet of vehicles. A main function of V2N is to enable a vehicle to connect to a cloud server through a mobile network, to use an application function, for example, navigation, entertainment, or anti-theft, provided by the cloud server. V2V communication may be used for information exchange and prompt between vehicles, and a most typical application is an anti-collision safety system between vehicles. A vehicle may communicate, through V2I communication, with a road or even another infrastructure such as a traffic light or a road barrier, to obtain road management information such as a traffic light signal time sequence. V2P communication may be used for safety alarm for a pedestrian or a non-motor vehicle on a road.

The terminal device 121 or the terminal device 122 may be at a fixed location, or may be mobile. FIG. 1 is only a schematic diagram. The communication system may further include another network device. For example, the communication system may further include a wireless relay device and a wireless backhaul device, which are not drawn in FIG. 1. Types and quantities of network devices and terminal devices included in the mobile communication system are not limited in this embodiment of this application.

In the mobile communication system 100, the terminal device 121 or the terminal device 122 accesses the network device in the mobile communication system in a wireless manner. The network device 101 may be a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), a gNB in an NR system, or a component or a part of a device included in a base station, for example, a central unit (central unit, CU), a distributed unit (distributed unit, DU), or a baseband unit (baseband unit, BBU). The terminal device 121 or the terminal device 122 in the mobile communication system 100 may also be referred to as a terminal, user equipment (user equipment, UE), a mobile station (mobile station, MS), a mobile terminal (mobile terminal, MT), or the like. The terminal device in embodiments of this application may be a mobile phone (mobile phone), a tablet (Pad), or a computer with a wireless transceiver function, or may be a wireless terminal used in scenarios such as virtual reality (virtual reality, VR), augmented reality (augmented reality, AR), industrial control (industrial control), self-driving (self-driving), telemedicine (remote medical), a smart grid (smart grid), transportation safety (transportation safety), a smart city (smart city), a smart home (smart home), and the like. In this application, the terminal device and a chip that can be applied to the terminal device are collectively referred to as a terminal device. It should be understood that a specific technology used by and a specific device form of the terminal device are not limited in embodiments of this application.

It should be understood that FIG. 1 schematically shows the terminal device 121, the terminal device 122, and the network device 110 only for ease of description, but this should not constitute any limitation on this application. The wireless communication system may further include more network devices, or may include more or fewer terminal devices. This is not limited in this application.

A resource for communication between the terminal device 121 and the terminal device 122 may be a resource allocated by the network device 110, or may be a resource that is selected from a preset resource pool. If the terminal device 121 and the terminal device 122 are within a coverage area of the network device 110, the resource for communication between the terminal device 121 and the terminal device 122 may be the resource allocated by the network device 110, or may be the resource selected from the preset resource pool. If the terminal device 121 or the terminal device 122 is not within a coverage area of the network device 110, the resource for communication between the terminal device 121 and the terminal device 122 is the resource selected from the preset resource pool. For example, the terminal device 121 sends a PSCCH to the terminal device 122 by using the resource that is selected from the preset resource pool, and the terminal device 122 needs to perform blind detection in the preset resource pool, to receive the PSCCH sent by the terminal device 121. If a bandwidth of a resource in the preset resource pool is relatively large or there are a relatively large quantity of corresponding sub-channels, overheads of blind detection by the terminal device 122 are relatively large. Consequently, energy consumption of the terminal device 122 is relatively high.

The following uses an example in which a first terminal device is the terminal device 122 and a second terminal device is the terminal device 121 for description.

To resolve the foregoing problem, in this embodiment of this application, the second terminal device may send first indication information. The first indication information indicates a candidate resource set for sending the PSCCH by the second terminal device. After receiving the first indication information, the first terminal device may receive, based on the candidate resource set indicated by the first indication information, the PSCCH sent by the second terminal device. This avoids overheads caused when the first terminal device needs to blindly detect the PSCCH on all resources in the preset resource pool.

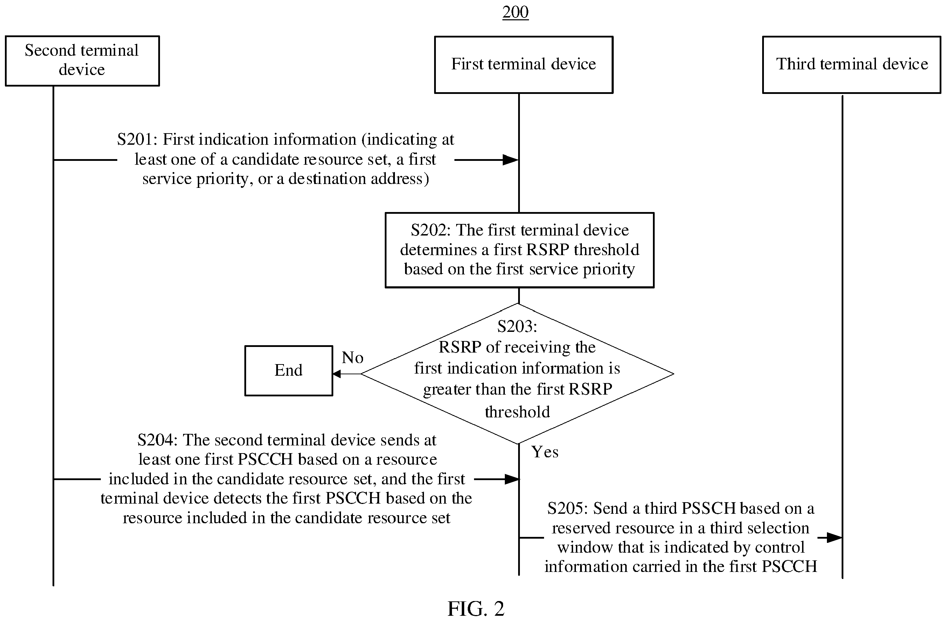

With reference to the accompanying drawings, the following describes a PSCCH detection method provided in an embodiment of this application. As shown in FIG. 2, the method 200 includes the following steps.

S201: A second terminal device sends first indication information, and a first terminal device receives the first indication information.

The first indication information indicates at least one of a candidate resource set, a first service priority, and a destination address. The destination address is an address corresponding to a service of the second terminal device.

Optionally, a resource included in the candidate resource set is a candidate resource used by the second terminal device to send a PSCCH.

Optionally, the candidate resource set includes one or more resources.

Optionally, the one or more resources included in the candidate resource set may be one or more frequency domain resources, or one or more time domain resources, or one or more time-frequency domain resources.

Optionally, the candidate resource set in S201 may be configured by a network device or preconfigured.

Optionally, the candidate resource set in S201 may be determined by the second terminal device. Optionally, the second terminal device may select one or more sub-channels in a relatively good channel condition as a frequency domain resource included in the candidate resource set. Optionally, the second terminal device may select, based on a periodicity of a first service of the second terminal device, one or more slots as a time domain resource included in the candidate resource set.

Optionally, the second terminal device may support one or more services. Optionally, the first indication information may further indicate the first service priority. Optionally, if the second terminal device supports only one service, the first service priority is a priority of the service. Optionally, if the second terminal device supports a plurality of services, the first service priority may be a priority corresponding to a service with a highest priority in the plurality of services. Optionally, if the second terminal device supports a plurality of services, the first service priority may be a priority corresponding to any one of the plurality of services.

Optionally, any one of the one or more services supported by the second terminal device may be a unicast service, a broadcast service, or a multicast service.

Optionally, a destination address of the first service may be a destination address to which the second terminal device needs to send first service data. Optionally, the destination address may be a destination ID of a destination of the first service at a layer 2. The layer 2 means a medium access control (medium access control, MAC) layer. Optionally, the second terminal device may obtain the destination ID of the layer 2 based on an application layer ID. For example, the ID of the layer 2 may be 24 bits.

Optionally, the first indication information may further indicate an identifier of the second terminal device.

One or more terminal devices may receive the first indication information sent by the second terminal device. This embodiment of this application only uses an example in which the first terminal device receives the first indication information for description.

Optionally, after receiving the first indication information, the first terminal device may send a first response message to the second terminal device. The first response message indicates that the first terminal device receives the first instruction information. After receiving the first response message, the second terminal device performs S202.

Optionally, the second terminal device may periodically send the first indication information, and a periodicity may be configured by the network device or preset. Optionally, if the second terminal device needs to transmit data, the second terminal device may send the first indication information. Optionally, the second terminal device may randomly send the first indication information. A trigger condition for sending the first indication information by the second terminal device is not limited in this embodiment of this application.

Optionally, the first indication information described in S201 indicates at least one of the candidate resource set used by the second terminal device to send the PSCCH, the first service priority, and the destination address. It may be understood that different indication information may also indicate at least one of the candidate resource set used by the second terminal device to send the PSCCH, the first service priority, and the destination address. Alternatively, indication information that indicates at least one of the candidate resource set used by the second terminal device to send the PSCCH, the first service priority, and the destination address may be sent by using different messages. For example, indication information 1 indicates the candidate resource set used by the second terminal device to send the PSCCH. Indication information 2 indicates the first service priority. Indication information 3 indicates the destination address. The indication information 1, the indication information 2, and the indication information 3 may be sent in one message. Alternatively, the indication information 1, the indication information 2, and the indication information 3 may be sent in different messages. For example, the indication information 1 is sent in a message 1, the indication information 2 is sent in a message 2, and the indication information 3 is sent in a message 3. Alternatively, two or three of the indication information 1, the indication information 2, and the indication information 3 are sent in a same message.

Optionally, the second terminal device may select, in any one of the following manners, a resource for sending the first indication information.

Manner 1: The second terminal device may send the first indication information on a candidate resource configured by the network device or a preconfigured candidate resource. The preconfigured candidate resource may be understood as a resource specified in a protocol. Optionally, a bandwidth of the preconfigured candidate resource is less than a first preset bandwidth value, or a quantity of sub-channels of the preconfigured candidate resource is less than a first preset channel value. In this way, when the second terminal device sends the first indication information on the preconfigured candidate resource, the first terminal can reduce overheads of blind detection in a process of detecting the first indication information on the preconfigured candidate resource. Optionally, a bandwidth of the candidate resource configured by the network device is less than a first bandwidth preset value, or a quantity of sub-channels of the preconfigured resource is less than a first channel preset value. In this way, when the second terminal device sends the first indication information on the candidate resource configured by the network device, the first terminal device can reduce overheads of blind detection in a process of detecting the first indication information on the candidate resource configured by the network device.

Optionally, the preconfigured candidate resource may be a narrowband resource, or the candidate resource configured by the network device may be referred to as a narrowband resource.

Optionally, both the first terminal device and the second terminal device may learn of the preconfigured candidate resource, or may learn of the candidate resource configured by the network device. In this case, the second terminal device may send the first indication information on the candidate resource configured by the network device or the preconfigured candidate resource, and the first terminal device may receive the first indication information on the candidate resource configured by the network device or the preconfigured candidate resource.

Manner 2: If the second terminal device needs to send the first indication information, the second terminal device may determine a second sensing window (sensing window) and a second selection window (selection window). The second terminal device may receive the at least one second PSCCH in the second sensing window. Control information carried in the at least one second PSCCH indicates a reserved resource in the second selection window. When selecting a resource in the second selection window, the second terminal device may avoid the reserved resource indicated by the control information carried in the at least one second PSCCH. This helps reduce interference and improve a possibility of successfully sending the first indication information. Optionally, a bandwidth of the second sensing window determined by the second terminal device may be less than a second bandwidth preset value, or a quantity of sub-channels of the second sensing window determined by the second terminal device may be less than a second channel preset value. This can save overheads of receiving the at least one second PSCCH by the second terminal device. Optionally, a bandwidth of the second selection window determined by the second terminal device may be less than a third preset bandwidth value, or a quantity of sub-channels of the second selection window may be less than a third preset sub-channel value. This can save overheads of detecting the first indication information by the first terminal device.

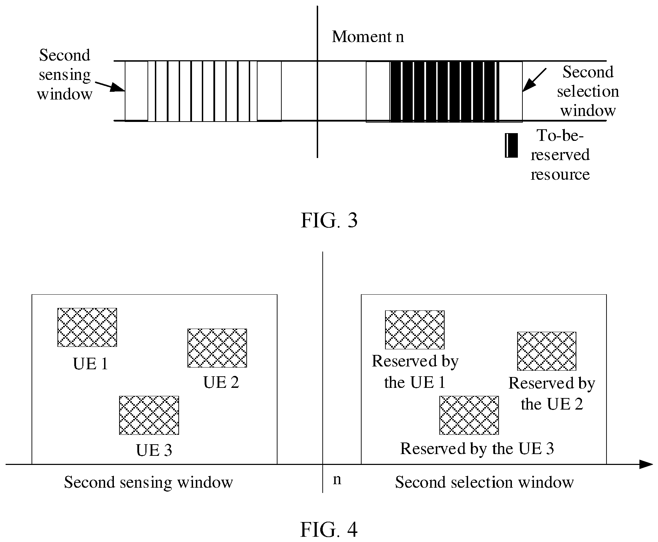

Specifically, as shown in FIG. 3, at a moment n of determining a requirement for sending the first indication information, the second terminal device may determine the second sensing window and the second selection window based on the moment n. The second terminal device may receive, in the second sensing window, a PSCCH sent by another terminal device, and control information carried in the PSCCH sent by the another terminal device indicates the reserved resource in the second selection window. The second terminal device may determine the reserved resource in the second selection window that is indicated by the control information carried in the PSCCH sent by the another terminal device. The second terminal device may receive the PSCCH on some resources in the second sensing window, and may not receive the PSCCH on some resources. If the second terminal device detects the PSCCH on some resources, the second terminal device measures RSRP of the detected PSCCH or RSRP of PSSCH associated with the detected PSCCH. The second terminal device may determine, based on the measured RSRP and an RSRP threshold, an interference status of the reserved resource indicated by the control information carried in the PSCCH in the second selection window. If the measured RSRP is greater than the RSRP threshold, it indicates that interference of the reserved resource in the second selection window indicated by the control information carried by the PSCCH is excessively large, and the reserved resource indicated by the control information carried by the PSCCH in the second selection window is unavailable. If the RSRP is less than the RSRP threshold, it indicates that interference of the reserved resource in the second selection window indicated by the control information carried by the PSCCH is relatively small and the reserved resource indicated by the control information carried by the PSCCH in the second selection window is available. The second terminal device may determine, based on the interference status of the resource, the resource for sending the first indication information. For example, as shown in FIG. 4, the second terminal device receives, on three resources in the second sensing window. PSCCHs sent by UE 1, UE 2, and UE 3, control information carried in the PSCCHs sent by the UE 1, the UE 2, and the UE 3 respectively reserves three resources in the second selection window. RSRP of the PSCCHs sent by the three UE detected by the second terminal device in the second sensing window is greater than the RSRP threshold. When determining the resource for sending the first indication information, the second terminal device may avoid the three resources reserved by the LTE 1, the UE 2, and the UE 3 in the second selection window.

It may be understood that the control information carried by the PSCCH may be SCI or SCI 1.

Manner 3: If the second terminal device needs to send the first indication information, the second terminal device may determine a second sensing window and a second selection window. The second terminal device may receive the at least one second PSCCH in the second sensing window. Control information carried in the at least one second PSCCH indicates a reserved resource in the second selection window. The second terminal device sends the first indication information based on the reserved resource in the second selection window, and the candidate resource configured by the network device, or the preconfigured candidate resource. Optionally, when selecting a resource from the candidate resource configured by the network device or the preconfigured candidate resource, the second terminal device may avoid the reserved resource in the second selection window of the at least one second PSCCH. In other words, if there is an intersecting resource between the reserved resource in the second selection window of the at least one second PSCCH and the candidate resource configured by the network device or the preconfigured candidate resource, when selecting, on the candidate resource configured by the network device or the preconfigured candidate resource, a resource for sending the first indication information, the second terminal device needs to avoid the intersecting resource. This helps reduce interference and improve a possibility of successfully sending the first indication information.

Optionally, both the first terminal device and the second terminal device may learn of the preconfigured candidate resource, or may learn of the candidate resource configured by the network device. In this case, the second terminal device may send the first indication information on the intersecting resource, and the first terminal device may receive the first indication information on the candidate resource configured by the network device or the preconfigured candidate resource.

Optionally, a bandwidth of the second sensing window determined by the second terminal device may be less than a second bandwidth preset value, or a quantity of sub-channels of the second sensing window determined by the second terminal device may be less than a second channel preset value. This can save overheads of detecting the at least one second PSCCH by the second terminal device. Optionally, a bandwidth of the second selection window determined by the second terminal device may be less than a third bandwidth preset value, or a quantity of sub-channels of the second selection window determined by the second terminal device may be less than a third preset sub-channel value. A bandwidth of the candidate resource configured by the network device or a bandwidth of the preconfigured candidate resource is less than a first bandwidth preset value, or a quantity of sub-channels of the candidate resource configured by the network device or a quantity of sub-channels of the preconfigured candidate resource is less than a first channel preset value. This can save overheads of detecting the first indication information by the first terminal device.

For the second selection window and the second sensing window, refer to FIG. 3.

Optionally, in S201, the second terminal device may send the first indication information in any one of the following manners.

Manner 1: The second terminal device sends a physical sidelink broadcast channel (physical sidelink broadcast channel, PSBCH). The PSBCH includes the first indication information.

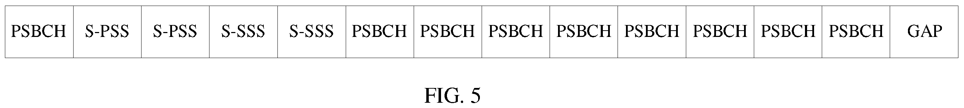

Optionally, the second terminal device may send a sidelink synchronization signal/physical broadcast channel block (sidelink synchronization signal/physical broadcast channel block, S-SS/PBCH block). The S-SS/PBCH block may be briefly referred to as a synchronization signal block (sidelink synchronization signal block, S-SSB). A PSBCH in the S-SSB includes the first indication information. FIG. 5 is a schematic diagram of the S-SSB. The S-SSB includes a sidelink primary synchronization signal (sidelink primary synchronization signal, S-PSS), a sidelink secondary synchronization signal (sidelink secondary synchronization signal, S-SSS), the PSBCH, and a GAP.

Optionally, the manner 1 may be applicable to a broadcast service.

Manner 2: The second terminal device may send the first indication information by using a second physical sidelink shared channel (physical sidelink shared channel, PSSCH).

Optionally, the first indication information may be carried in radio resource control (radio resource control, RRC) signaling, and the second terminal device may send, by using the second PSSCH, the RRC signaling that carries the first indication information.

Optionally, the first indication information may be carried in a MAC control element (control element, CE), and the second terminal device may send, by using the second PSSCH, the MAC CE that carries the first indication information.

Optionally, the first indication information may be carried in second stage sidelink control information (sidelink control information, SCI 2). The second terminal device may send, by using the second PSSCH, the SCI 2 that carries the first indication information.

Optionally, if the first terminal device receives the first indication information by using the second PSSCH, the first terminal device may send a first hybrid automatic repeat request (hybrid automatic repeat request, HARQ) message to the second terminal device. In this case, the first response message may be a first HARQ message. After receiving the first HARQ message, the second terminal device may determine that the first terminal device receives the first indication information, and may perform S202.

Optionally, the second terminal device may further send second indication information. The second indication information indicates that the second PSSCH carries the first indication information. The second PSSCH may carry a unicast identifier or a multicast identifier. The first terminal device determines, based on the unicast identifier or the multicast identifier in the second PSSCH, that the second PSSCH is sent to the first terminal device. Therefore, the first terminal device may parse the first indication information in the second PSSCH. For another terminal device that receives the second indication information, for example, a fourth terminal device, after the fourth terminal device receives the second PSSCH, the fourth terminal device determines, based on the unicast identifier or the multicast identifier in the second PSSCH, that the second PSSCH is not sent to the fourth terminal device. However, if the fourth terminal device needs to sense a resource, the fourth terminal device may determine, based on the second indication information, that the second PSSCH carries the first indication information. Therefore, the fourth terminal device may determine, based on the first indication information in the second PSSCH, a candidate resource set for sending a PSCCH by the second terminal device. The fourth terminal device may detect a first PSCCH based on a resource included in the candidate resource set (the first PSCCH may be the same as or different from a first PSCCH detected by the first terminal device). The fourth terminal device may determine, based on the received first PSCCH, a reserved resource in a fourth selection window that is indicated by control information carried in the first PSCCH. In this case, when selecting a resource, the fourth terminal device avoids the reserved resource indicated by the control information carried in the first PSCCH. In other words, a purpose of sending the second indication information by the second terminal device is to enable the first indication message in the second PSSCH to be parsed by any receiver, regardless of whether the receiver is a receiver of the second PSSCH.

Optionally, the second terminal device may send SCI associated with the second PSSCH. The SCI associated with the second PSSCH includes the second indication information. The SCI associated with the second PSSCH may be first stage sidelink control information SCI 1 or the sidelink control information SCI. Optionally, SCI designs of different communication systems are different. In some communication systems, the SCI is sent by using the PSCCH. In some communication systems, some SCI is sent by using the PSCCH, and remaining SCI is sent by using the PSSCH. For example, SCI 1 is sent by using the PSCCH, and SCI 2 is sent by using the PSSCH. Optionally, in the manner 2, the second terminal device may send the first indication information by using the second PSSCH in a multicast or unicast manner. Optionally, the manner 2 may be applicable to a multicast service or a unicast service.

Optionally, if the first indication information indicates the first service priority, S202 is performed. If the first indication information does not indicate the first service priority, S203 or S204 is performed.

S202: The first terminal device determines a first reference signal received power (reference signal received power, RSRP) threshold based on the first service priority.

It may be understood that services of different service priorities correspond to different RSRP thresholds. A higher service priority of a specific service indicates a higher corresponding RSRP threshold and a larger quantity of resources in the selection window that easily meet a requirement. A lower service priority of a specific service indicates a lower corresponding RSRP threshold and a smaller quantity of resources in the selection window that easily meet a requirement. Therefore, a protocol may specify a relationship between the service priority and the RSRP threshold. When determining the first service priority based on the first indication information, the first terminal device may determine, based on the relationship between the service priority and the RSRP threshold, a first RSRP threshold corresponding to the first service priority. Optionally, the first terminal device may alternatively determine, based on the relationship between the service priority and the RSRP threshold, a first RSRP threshold corresponding to both the first service priority and a second service priority.

The second service priority is a priority corresponding to one service of the first terminal device. The first terminal device may support one or more services. Optionally, if the first terminal device supports only one service, the second service priority is a priority of the service. Optionally, if the first terminal device supports a plurality of services, the second service priority may be a priority corresponding to a service with a highest priority in the plurality of services. Optionally, if the first terminal device supports a plurality of services, the second service priority may be a priority corresponding to any one of the plurality of services. Optionally, the second service priority is a priority corresponding to a service to be transmitted by the first terminal device.

Optionally, step S202 may not exist, that is, the first RSRP threshold may be preset. In other words, the first indication information may indicate the first service priority, but the first terminal device does not perform S202. Alternatively, the first indication information indicates the first service priority, but the first terminal device does not perform S202.

S203: The first terminal device determines whether RSRP of receiving the first indication information is greater than the first RSRP threshold, and if the RSRP is greater than the first RSRP threshold, performs S204. If the RSRP is not greater than the first RSRP threshold, the method 200 ends.

Optionally, if the first terminal device receives the first indication information by using the PSBCH, the RSRP of receiving the first indication information in S203 may be RSRP of receiving the PSBCH.

Optionally, if the first terminal device receives the first indication information by using the S-SSB, the RSRP of receiving the first indication information in S203 may be RSRP of receiving the PSBCH in the S-SSB.

Optionally, if the first terminal device receives the first indication information by using the second PSSCH, the RSRP of receiving the first indication information in S203 may be RSRP of receiving the second PSSCH, or RSRP of receiving a PSCCH associated with the second PSSCH.

S204: The second terminal device sends at least one first PSCCH based on the resource included in the candidate resource set, and the first terminal device detects the first PSCCH based on the resource included in the candidate resource set.

The first PSCCH detected by the first terminal device based on the resource included in the candidate resource set may be one of the at least one first PSCCH, or may be a plurality of the at least one first PSCCH. This embodiment of this application uses an example in which only one PSCCH is detected for description.

Optionally, the second terminal device may send the at least one first PSCCH on some resources included in the candidate resource set, or may send the at least one first PSCCH on all resources included in the candidate resource set. Optionally, the first terminal device may detect at least some of the at least one first PSCCH on some resources included in the candidate resource set. Optionally, the first terminal device may detect at least some of the at least one first PSCCH on all resources included in the candidate resource set.

Optionally, if the first terminal device needs to transmit data, the first terminal device may determine a first sensing window. The first sensing window is similar to the second sensing window in FIG. 3. To avoid repetition, the first sensing window is not described in detail again. The first terminal device may determine the intersecting resource between the resource included in the candidate resource set indicated by the first indication information and the resource in the first sensing window, and detect the first PSCCH on the intersecting resource. For example, the candidate resource set indicated by the first indication information includes a resource 1, a resource 2, and a resource 3. If the first sensing window includes the resource 3 and a resource 4, the first terminal device detects the first PSCCH on the resource 3.

S205: The first terminal device sends a third PSCCH to a third terminal device based on a reserved resource in a third selection window that is indicated by the control information carried in the first PSCCH, and the third terminal device receives the third PSCCH.

The third selection window is a selection window corresponding to the first sensing window determined by the first terminal device. In other words, the first terminal device may determine, by using the first PSCCH detected in the first sensing window, the resource reserved in the third selection window that is indicated by the control information carried in the first PSCCH. Optionally, when sending the third PSCCH to the third terminal device, the first terminal device may avoid the reserved resource in the third selection window that is indicated by the control information carried in the first PSCCH. For example, the third selection window includes a resource 5 and a resource 6, and the control information carried in the first PSCCH indicates that the resource 5 in the third selection window is reserved. In this case, the first terminal device does not send the third PSCCH on the resource 5, but sends the third PSCCH on the resource 6. This can avoid interference caused to the second terminal device when the first terminal device sends the third PSCCH on the resource 5, and help improve a possibility of successfully transmitting the third PSCCH. Alternatively, the first terminal device measures RSRP of the detected first PSCCH or RSRP of PSSCH associated with the detected first PSCCH. If the measured RSRP is greater than the RSRP threshold, it indicates that interference of the resource 5 indicated by the control information carried by the first PSCCH is excessively large. Then the first terminal device does not send the third PSCCH on the resource 5, but sends the third PSCCH on the resource 6.

It may be understood that, the first indication information in the method 200 may indicate the destination address or may not indicate the destination address. If the first indication information indicates the destination address, the first terminal device may not perform any processing.

It may be understood that the second terminal device in the method 200 may be different from or the same as the third terminal device. This is not limited in this embodiment of this application.

Optionally, the method 200 may include three steps S201, S204, and S205, but does not include steps S202 and S203. In other words, regardless of whether the first indication information indicates the destination address or the first service priority, the first terminal device may send the third PSCCH to the third terminal device based on the reserved resource indicated by the detected control information carried in the first PSCCH.

Optionally, if the second terminal device determines to update the candidate resource set for sending the PSCCH, the second terminal device may send third indication information. The third indication information indicates the updated candidate resource set for sending the PSCCH. Optionally, in S204, a PSSCH associated with at least some of the at least one first PSCCH on all resources included in the candidate resource set may carry the third indication information. For example: A PSSCH associated with each of the at least one first PSCCH may carry the third indication information. After sending the at least one first PSCCH, the second terminal device sends a subsequent PSCCH on the updated candidate resource set. In this way, the first terminal device receiving the first PSCCH may receive the subsequent PSCCH on the updated candidate resource set. Optionally, after receiving one PSSCH associated with the first PSCCH, the first terminal device may send a HARQ of the received PSSCH to the second terminal device. The second terminal device determines, based on the HARQ, that the first terminal device receives the third indication information. Therefore, the second terminal device may send a subsequent PSCCH based on the resource included in the updated candidate resource set. In other words, the second terminal device needs to ensure that the first terminal device correctly receives the third indication information, and then sends the subsequent PSCCH based on the resource included in the updated candidate resource set. This avoids that the second terminal device directly sends the subsequent PSCCH based on the updated candidate resource set. If the first terminal device does not correctly receive the third indication information, the first terminal device continues to receive the PSCCH based on the resource included in the non-updated candidate resource set, causing an error in receiving the PSCCH.

Optionally, similar to the first indication information, the third indication information may also indicate a third service priority or another destination address. To avoid repetition, details are not described in this embodiment of this application. Optionally, the third service priority indicated by the third indication information may be the same as or different from the first service priority indicated by the first indication information. Optionally, the another destination address indicated by the third indication information may be the same as or different from the destination address indicated by the first indication information.

In the method 200, the second terminal device sends the first indication information, where the first indication information may indicate the candidate resource set and the first service priority. The first terminal device determines the first RSRP threshold based on the first service priority. When the RSRP of receiving the first indication information by the first terminal device is greater than the first RSRP threshold, the first terminal device detects the first PSCCH based on the candidate resource set, and sends the third PSCCH to the third terminal device based on the reserved resource in the third selection window of the first PSCCH. In other words, in a process of sending the third PSCCH to the third terminal device, the first terminal device may avoid the reserved resource in the third selection window of the first PSCCH. This can improve a success rate of transmitting the third PSSCH.

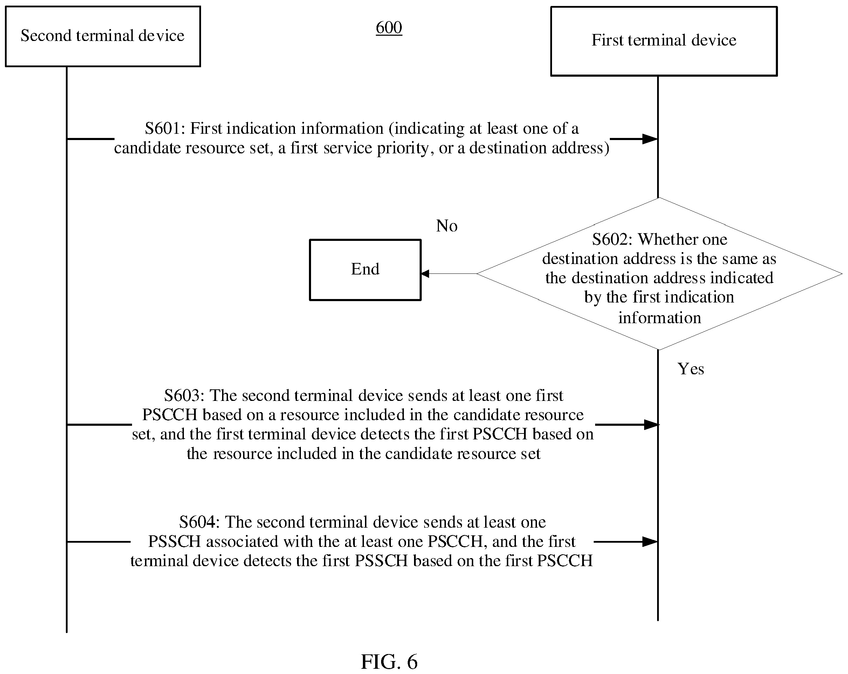

In the method 200, the first terminal device needs to send the third PSSCH to the third terminal device, which is behavior of sending the third PSSCH by the first terminal device. The following describes, with reference to a method 600, behavior of receiving the first PSSCH by the first terminal device. The method 600 shown in FIG. 6 includes the following steps.

S601 is the same as S201.

If the first indication information indicates a destination address, S602 is performed.

S602: A first terminal device determines whether a destination address of one service is the same as the destination address indicated by the first indication information, and if the destination address of the service is the same as the destination address indicated by the first indication information, performs S603. If the destination address of the service is different from the destination address indicated by the first indication information, the method 200 ends. Optionally, if the network device configures the first RSRP threshold or a protocol specifies a first RSRP threshold, the first terminal device may determine whether RSRP of receiving the first indication information is greater than a first RSRP threshold. If the first terminal device determines that the RSRP of receiving the first indication information is greater than the first RSRP threshold, S602 is performed. Alternatively, after S602, the first terminal device may determine whether RSRP of receiving the first indication information is greater than a first RSRP threshold. If the first terminal device determines that the RSRP of receiving the first indication information is greater than the first RSRP threshold, S603 is performed.

Optionally, if the first indication information indicates a first service priority, similar to the method 200, the first terminal device may determine a first RSRP threshold based on the first service priority, and the first terminal device may determine whether RSRP of receiving the first indication information is greater than a first RSRP threshold. If the first terminal device determines that the RSRP of receiving the first indication information is greater than the first RSRP threshold, S602 is performed. Alternatively, after S602, the first terminal device may determine whether RSRP of receiving the first indication information is greater than a first RSRP threshold. If the first terminal device determines that the RSRP of receiving the first indication information is greater than the first RSRP threshold, S603 is performed.

In other words, the method 600 may consider whether the RSRP of receiving the first indication information is greater than the first RSRP threshold. The first RSRP threshold may be configured by the network device or preset, or may be determined by the first terminal device based on the first service priority. Certainly, the method 600 may not consider the first RSRP threshold. This is not limited in this embodiment of this application.

Optionally, in the method 600, the first indication information may indicate the first service priority or may not indicate the first service priority. If the first indication information indicates the first service priority, the first terminal device may not perform any processing, or may determine the first RSRP threshold based on the first service priority.

S603 is the same as S204.

S604: The second terminal device sends at least one PSSCH associated with the at least one first PSCCH, and the first terminal device receives the first PSSCH based on the first PSCCH detected in S603.

One PSCCH may be associated with one PSSCH. The first PSSCH is a PSSCH that is in the at least one PSSCH and that is associated with the first PSCCH.

Specifically, the first PSCCH may indicate a resource for receiving the first PSSCH, a manner of decoding the first PSSCH, or the like, and the first terminal device may receive the first PSSCH based on the first PSCCH.

Therefore, in the method 600, the first indication information may indicate a candidate resource set and the destination address, and the first RSRP threshold may be configured by a network device or preconfigured. If the first terminal device determines that the destination address indicated by the first indication information is the same as one destination address of the first terminal device, the first terminal device determines that the second terminal device needs to send the PSSCH to the first terminal device. Therefore, the first terminal device may receive, based on the first PSCCH, the first PSSCH associated with the first PSCCH.

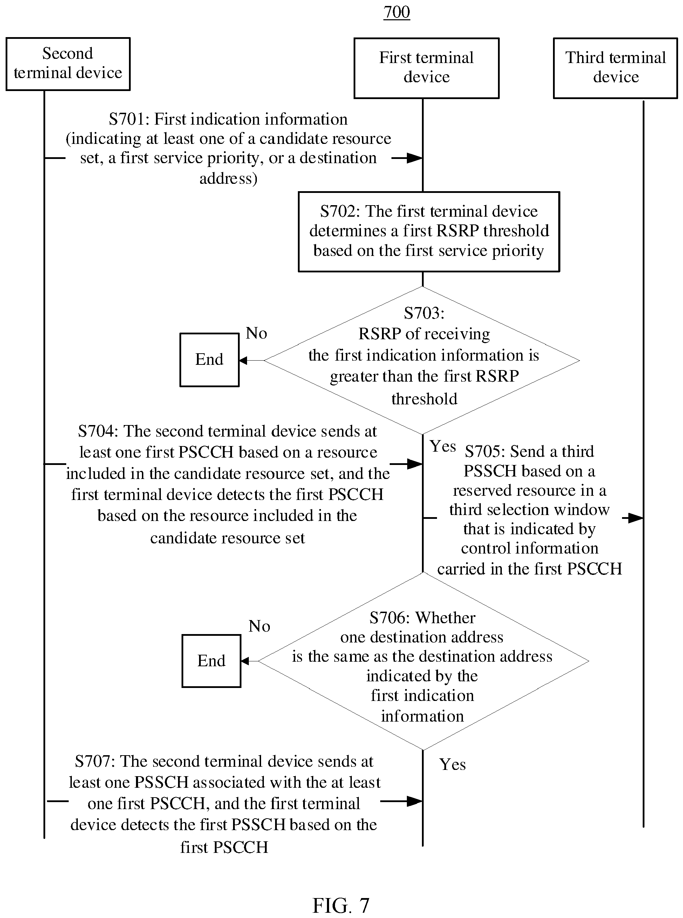

In the method 200, the first terminal device needs to send the third PSSCH to the third terminal device, which is behavior of sending the third PSSCH by the first terminal device. The method 600 describes behavior of receiving the first PSSCH by the first terminal device. The following describes, with reference to the method 700, behavior of sending the third PSSCH by the first terminal device to the third terminal device and receiving the first PSSCH by the first terminal device. A method 700 shown in FIG. 7 includes the following steps.

S701 is the same as S201.

If the first indication information indicates a first service priority, S602 is performed.

S702 is the same as S202.

S703: The first terminal device determines whether RSRP of receiving the first indication information is greater than the first RSRP threshold, and if the RSRP is greater than the first RSRP threshold, performs S704. If the RSRP is not greater than the first RSRP threshold, the method 700 ends.

Optionally, the first RSRP threshold may be determined in S702, or configured by a network device, or preconfigured. This is not limited in this embodiment of this application. If the first RSRP threshold is configured by the network device or preconfigured, step S702 may not exist. In other words, regardless of whether the first indication information indicates the first service priority, the first RSRP threshold in S703 may be configured by the network device or preset.

S704 is the same as S204.

S705: The first terminal device sends a third PSCCH to a third terminal device based on a reserved resource in a third selection window that is indicated by the control information carried in the first PSCCH, and the third terminal device receives the third PSCCH.

For S705, refer to the description of S205.

Optionally, if the first indication information indicates a destination address, S706 is performed.

S706: A first terminal device determines whether a destination address of one service is the same as the destination address indicated by the first indication information, and if the destination address of the service is the same as the destination address indicated by the first indication information, performs S707. If the destination address of the service is different from the destination address indicated by the first indication information, the method 700 ends.

For S706, refer to the description of S602.

S707: The second terminal device sends at least one PSSCH associated with the at least one first PSCCH, and the first terminal device receives a first PSSCH based on the first PSCCH detected in S704.

One PSCCH may be associated with one PSSCH. The first PSSCH is a PSSCH that is in the at least one PSSCH and that is associated with the first PSCCH.

Optionally, in the method 700, a sequence of the steps is not limited. If S702, S703, S704, and S705 are performed before S706 and S707, it indicates that when the first terminal device determines that the RSRP of receiving the first indication information is greater than the first RSRP threshold, the first terminal device may detect the first PSCCH based on the resource included in the candidate resource set. After the first PSCCH is detected, it is determined, based on the destination address indicated by the first indication information, whether the second terminal device needs to transmit the PSSCH to the first terminal device. If the second terminal device needs to transmit the PSSCH, the first PSSCH is received based on the first PSCCH. If S706 is performed before S703, an execution sequence may be S701, S706, S704, S707, S702, S703 and S705 (a sequence between S707 and S702 or S703 is not limited, and S707 may be performed before or after S702 or S703). Then, the first terminal device determines, based on the destination address indicated by the first indication information, whether the second terminal device needs to transmit the PSSCH to the first terminal device. If the second terminal device needs to transmit the PSSCH, the first terminal device may detect the first PSCCH based on the resource included in the candidate resource set, and after the first PSCCH is detected, receive the first PSSCH based on the first PSCCH. Then, if the first terminal device determines that the RSRP of receiving the first indication information is greater than the first RSRP threshold, the first terminal device may send the third PSSCH to the third terminal device based on the reserved resource in the third selection window of the first PSCCH. Optionally, an execution sequence of the method 700 may be: S701, S702, S703, S706, S704, S707 and S705. Optionally, an execution sequence of the method 700 may be S701, S706, S702, S703, S704, S707 and S705. In other words, the first terminal device detects the first PSCCH only when both S703 and S706 are met. In other words, the first terminal device detects the first PSCCH only when both S703 and S706 are met. In other words, in the method 700, a trigger condition for detecting the first PSCCH by the first terminal device may be S703 or S706. Based on the detected first PSCCH, the first PSCCH can both receive the first PSSCH and send the third PSSCH.

Optionally, in the foregoing method embodiment, the second terminal device sends the first indication information by using the PSBCH or by using the second PSSCH. The second terminal device may alternatively send the first indication information by using another message. This is not limited in this embodiment of this application.

In a possible implementation, the second terminal device sends the first indication information. The second terminal device sends the PSCCH on the resource included in the candidate resource set, and the first terminal device detects the PSCCH on the resource included in the candidate resource set indicated by the first indication information. In other words, the second terminal device sends the PSCCH on the resource included in the candidate resource set indicated by the first indication information, and the first terminal device receives the PSCCH on the resource included in the candidate resource set indicated by the first indication information. This can reduce overheads of blind detection.

In a possible implementation, the second terminal device sends the first indication information. The second terminal device sends the PSCCH on the resource included in the candidate resource set, and the first terminal device detects the PSCCH on an intersecting resource between the resource included in the candidate resource set indicated by the first indication information and a resource of a first sensing window. In other words, the second terminal device sends the PSCCH on the resource included in the candidate resource set indicated by the first indication information, and the first terminal device receives the PSCCH with reference to the first sensing window and the candidate resource.

In a possible implementation, the second terminal device sends the first indication information.

The second terminal device sends the PSCCH on an intersecting resource between the resource included in the candidate resource set and a resource of a first selection window determined by the second terminal device. The first terminal device detects the PSCCH on the resource included in the candidate resource set indicated by the first indication information. In other words, when sending the PSCCH, the second terminal device may refer to the resource in the candidate resource set and the resource in the first selection window, and the first terminal device receives the PSCCH on the resource included in the candidate resource set indicated by the first indication information. This can reduce overheads of blind detection.

In a possible implementation, the second terminal device sends the first indication information. The second terminal device sends the PSCCH on an intersecting resource between the resource included in the candidate resource set and a resource of a first selection window determined by the second terminal device. The first terminal device detects the PSCCH on an intersecting resource between the resource included in the candidate resource set indicated by the first indication information and a resource of a first sensing window. In other words, when sending the PSCCH, the second terminal device may refer to the resource in the candidate resource set and the resource in the first selection window, and the first terminal device receives the PSCCH with reference to the first sensing window and the candidate resource. This can reduce overheads of blind detection. It should be noted that in this embodiment of this application, the first sensing window is determined by the first terminal device. The first selection window is determined by the second terminal device. The first sensing window is not related to the first selection window. To be specific, when needing to transmit data, the first terminal device may determine the first sensing window, and a selection window corresponding to the first sensing window, for example, a third selection window corresponding to the first sensing window. When needing to transmit data, the second terminal device may determine a third sensing window, and the first selection window corresponding to the third sensing window.

It may be understood that, the sending the first indication information by using the second PSSCH may be understood as that the second terminal device may send the first indication information by using the second PSSCH, where the first indication information may be carried in a MAC CE, RRC signaling, or SCI 2 that is sent by using the second PSSCH, or the first indication information may be carried in information other than a MAC CE, RRC signaling, or SCI 2. This is not limited in this embodiment of this application.

It may be understood that an execution sequence of each of the foregoing method embodiments is not limited by a number, and the execution sequence may be determined based on internal logic.

The execution sequence of the method may be changed provided that no conflict exists.

It may be understood that the foregoing method embodiments may be independent embodiments or embodiments that may be combined with each other. Steps in different method embodiments may be combined into another embodiment, and steps in a same method embodiment may alternatively be combined into another embodiment.

It may be understood that the methods and operations performed by the terminal device in the foregoing method embodiments may alternatively be performed by a component (for example, a chip or a circuit) that can be used in the terminal device, and the methods and operations performed by the network device in the foregoing method embodiments may alternatively be performed by a component (for example, a chip or a circuit) that can be used in the network device.

The foregoing describes method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

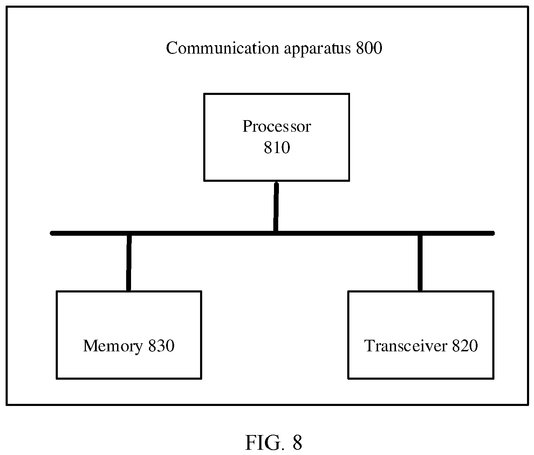

FIG. 8 shows a communication apparatus 800 according to an embodiment of this application. The communication apparatus 800 includes a processor 810 and a transceiver 820. The processor 810 and the transceiver 820 communicate with each other through an internal connection path. The processor 810 is configured to execute instructions, to control the transceiver 820 to send a signal and/or receive a signal.

Optionally, the communication apparatus 800 may further include a memory 830. The memory 830 communicates with the processor 810 and the transceiver 820 through an internal connection path. The memory 830 is configured to store instructions, and the processor 810 may execute the instructions stored in the memory 830. In a possible implementation, the communication apparatus 800 is configured to perform procedures and steps corresponding to the first terminal device in the foregoing method embodiments. In another possible implementation, the communication apparatus 800 is configured to perform procedures and steps corresponding to the second terminal device in the foregoing method embodiments.

It should be understood that the communication apparatus 800 may be specifically the first terminal device or the second terminal device in the foregoing embodiments, or may be a chip or a chip system. Correspondingly, the transceiver 820 may be a transceiver circuit of the chip. This is not limited herein. Specifically, the communication apparatus 800 may be configured to perform steps and/or procedures corresponding to the first terminal device or the second terminal device in the foregoing method embodiments. Optionally, the memory 830 may include a read-only memory and a random access memory, and provide instructions and data to the processor. A part of the memory may further include a nonvolatile random access memory. For example, the memory may further store information of a device type. The processor 810 may be configured to execute the instructions stored in the memory; and when the processor 810 executes the instructions stored in the memory, the processor 810 is configured to perform steps and/or procedures corresponding to the first terminal device or the second terminal device in the foregoing method embodiment.

In an implementation process, steps in the foregoing methods may be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor. To avoid repetition, details are not described herein. It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The methods, steps, and logical block diagrams that are disclosed in embodiments of this application can be implemented or performed. The general-purpose processor may be a microprocessor, or any conventional processor. The steps in the methods disclosed with reference to embodiments of this application may be directly performed and completed by a hardware decoding processor, or may be performed and completed by a combination of hardware and a software module in the decoding processor. The software module may be located in a mature storage medium in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Based on description used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

According to the method provided in embodiments of this application, this application further provides a computer program product. The computer program product includes computer program code. When the computer program code runs on a computer, the computer is enabled to perform the steps or procedures performed by the first terminal device or the second terminal device in the foregoing method embodiments.

According to the method provided in embodiments of this application, this application further provides a computer-readable storage medium. The computer-readable storage medium stores program code. When the program code runs on a computer, the computer is enabled to perform the steps or procedures performed by the first terminal device or the second terminal device in the foregoing method embodiments.

According to the methods provided in embodiments of this application, this application further provides a communication system. The communication system includes one or more first terminal devices and one or more second terminal devices.

The foregoing apparatus embodiments completely correspond to the method embodiments. A corresponding module or unit performs a corresponding step. For example, a communication unit (a transceiver) performs a receiving step or a sending step in the method embodiments, and a processing unit (a processor) may perform steps other than the sending step and the receiving step. A function of a specific unit may be based on a corresponding method embodiment. There may be one or more processors.

In this application, "indication" may include a direct indication and an indirect indication, or may include an explicit indication and an implicit indication. Information indicated by specific information is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, terms and English acronyms and abbreviations are all examples given for ease of description, and should not constitute any limitation on this application. This application does not exclude a possibility of defining another term that can implement a same or similar function in an existing or future protocol.

A person of ordinary skill in the art may be aware that, in combination with illustrative logical blocks (illustrative logical block) described in embodiments disclosed in this specification and steps (step) can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the functions, all or some of the functions can be implemented in a form of a computer program product. The computer program product includes one or more computer instructions (programs). When the computer program instructions (programs) are loaded and executed on the computer, the procedure or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical sidelink control channel PSCCH detection method, wherein the method is applicable to a first terminal device, and the method comprises:
receiving first indication information, wherein the first indication information indicates a candidate resource set, and a resource comprised in the candidate resource set is a candidate resource used by a second terminal device to send a PSCCH; and
if reference signal received power RSRP corresponding to the received first indication information is greater than a first RSRP threshold, detecting a first PSCCH based on the resource comprised in the candidate resource set indicated by the first indication information.

2. The method according to claim 1, wherein the first RSRP threshold is configured by a network device or preset.

3. The method according to claim 1, wherein the first indication information further indicates a first service priority, and the method further comprises:
determining the first RSRP threshold based on a second service priority of the first terminal device and the first service priority, or determining the first RSRP threshold based on the first service priority.

4. The method according to any one of claims 1 to 3, wherein the first indication information further indicates a destination address, the destination address indicated by the first indication information is an address corresponding to a service, and the detecting a first PSCCH based on the resource comprised in the candidate resource set indicated by the first indication information comprises:
if a destination address of one service of the first terminal device is the same as the destination address indicated by the first indication information, detecting the first PSCCH based on the resource comprised in the candidate resource set indicated by the first indication information; and
the method further comprises:
receiving, based on the first PSCCH, a first physical sidelink shared channel PSSCH associated with the first PSCCH.

5. The method according to any one of claims 1 to 4, further comprising:
receiving radio resource control RRC signaling by using a second PSSCH, wherein the RRC signaling carries the first indication information; or
receiving a media access control control element MAC CE by using the second PSSCH, wherein the MAC CE carries the first indication information; or
receiving second stage sidelink control information SCI 2 by using the second PSSCH, wherein the SCI 2 carries the first indication information.

6. The method according to claim 5, wherein the method further comprises:
receiving sidelink control information SCI associated with the second PSSCH, wherein the SCI comprises second indication information, and the second indication information indicates that the second PSSCH carries the first indication information.

7. The method according to any one of claims 1 to 4, wherein the receiving first indication information comprises:
receiving a physical sidelink broadcast channel PSBCH, wherein the PSBCH comprises the first indication information.

8. The method according to any one of claims 1 to 7, wherein the receiving first indication information comprises:
receiving the first indication information on a candidate resource configured by the network device or a preconfigured candidate resource.

9. The method according to any one of claims 1 to 8, wherein the detecting a first PSCCH based on the resource comprised in the candidate resource set indicated by the first indication information comprises:
determining that there is an intersecting resource between the resource comprised in the candidate resource set indicated by the first indication information and a resource in a first sensing window; and
detecting the first PSCCH on the intersecting resource.

10. A physical sidelink control channel PSCCH detection method, wherein the method is applicable to a second terminal device, and the method comprises:
sending first indication information, wherein the first indication information indicates a candidate resource set, and a resource comprised in the candidate resource set is a candidate resource used by the second terminal device to send a PSCCH; and
sending at least one first PSCCH based on the resource comprised in the candidate resource set indicated by the first indication information.

11. The method according to claim 10, wherein the first indication information further indicates a first service priority.

12. The method according to claim 10 or 11, wherein the first indication information further indicates a destination address, the destination address indicated by the first indication information is an address corresponding to a service, and the method further comprises:
sending, based on the at least one first PSCCH, at least one physical sidelink shared channel PSSCH associated with the at least one first PSCCH.

13. The method according to any one of claims 10 to 12, wherein the method further comprises:
sending radio resource control RRC signaling by using a second PSSCH, wherein the RRC signaling carries the first indication information; or
sending a media access control control element MAC CE by using a second PS SCH, wherein the MAC CE carries the first indication information; or
sending second stage sidelink control information SCI 2 by using a second PSSCH, wherein the SCI 2 carries the first indication information.

14. The method according to claim 13, wherein the method further comprises:
sending sidelink control information SCI associated with the second PS SCH, wherein the SCI comprises second indication information, and the second indication information indicates that the second PSSCH carries the first indication information.

15. The method according to any one of claims 10 to 12, wherein the sending first indication information comprises:
sending a physical sidelink broadcast channel PSBCH, wherein the PSBCH comprises the first indication information.

16. The method according to any one of claims 10 to 15, wherein the sending first indication information comprises:
sending the first indication information based on a candidate resource configured by a network device or a preconfigured candidate resource.

17. The method according to claim 16, wherein the sending the first indication information based on a candidate resource configured by a network device or a preconfigured candidate resource comprises:
receiving at least one second PSCCH in a second sensing window;
determining a reserved resource in a second selection window based on the at least one second PSCCH; and
sending the first indication information based on the reserved resource in the second selection window and the preconfigured candidate resource; or
sending the first indication information based on the reserved resource in the second selection window and the candidate resource configured by the network device.

18. The method according to any one of claims 10 to 17, wherein the sending at least one first PSCCH based on the resource comprised in the candidate resource set indicated by the first indication information comprises:
determining that there is an intersecting resource between the resource comprised in the candidate resource set indicated by the first indication information and a resource in a first selection window; and
sending the at least one first PSCCH on the intersecting resource.

19. A communication apparatus, comprising a processor, wherein the processor is configured to perform the method according to any one of claims 1 to 18.

20. A communication apparatus, comprising a processor and a memory, wherein the processor is coupled to the memory, the memory is configured to store a computer program or instructions, and the processor is configured to execute the computer program or the instructions in the memory, to enable the method according to any one of claims 1 to 18 to be performed.

21. A computer-readable storage medium, wherein the computer-readable storage medium stores a program or instructions used to perform the method according to any one of claims 1 to 18.
